# EUROPÄISCHE PATENTSCHRIFT

(11) **EP 1 812 218 B1**
(45) Veröffentlichungstag und Bekanntmachung des Hinweises auf die Patenterteilung: **04.05.2011**
(21) Anmeldenummer: 05797212.7
(22) Anmeldetag: 06.10.2005
(51) Int. Cl.: B29C 45/76, B29C 45/14, G05B 19/12

(54) **VERFAHREN UND VORRICHTUNG ZUM HERSTELLEN VON UNTERSCHIEDLICH BESCHICHTETEN KUNSTSTOFFFORMTEILEN**
METHOD AND DEVICE FOR PRODUCING PLASTIC MOULDED PARTS WITH DIFFERENT COATINGS
PROCEDE ET DISPOSITIF POUR PRODUIRE DES PIECES MOULEES EN PLASTIQUE A REVETEMENT DIFFERENT

(30) Priorität: 15.10.2004 DE 102004050290
(43) Veröffentlichungstag der Anmeldung: 01.08.2007
(73) Patentinhaber: KraussMaffei Technologies GmbH, 80997 München (DE)
(72) Erfinder: MITZLER, Jochen, 85221 Dachau (DE)
(74) Vertreter: Wilhelm, Ludwig
(86) Internationale Anmeldenummer: PCT/EP2005/055074
(87) Internationale Veröffentlichungsnummer: WO 2006/042792

(56) Entgegenhaltungen:
- EP-A- 0 283 034
- EP-A- 0 491 657
- EP-A- 0 780 744
- WO-A-2004/043670
- PATENT ABSTRACTS OF JAPAN Bd. 016, Nr. 325 (M-1280), 15. Juli 1992 (1992-07-15) & JP 04 091913 A (SAKAI KONPOJITSUTO KK), 25. März 1992 (1992-03-25)
- PATENT ABSTRACTS OF JAPAN Bd. 014, Nr. 315 (M-0995), 6. Juli 1990 (1990-07-06) & JP 02 106308 A (YUUSHIN SEIKI:KK), 18. April 1990 (1990-04-18)
- PATENT ABSTRACTS OF JAPAN Bd. 017, Nr. 385 (M-1448), 20. Juli 1993 (1993-07-20) & JP 05 069494 A (SEKISUI CHEM CO LTD), 23. März 1993 (1993-03-23)
- PATENT ABSTRACTS OF JAPAN Bd. 018, Nr. 679 (M-1728), 21. Dezember 1994 (1994-12-21) -& JP 06 270084 A (AMADA METRECS CO LTD), 27. September 1994 (1994-09-27)

## Beschreibung

Die Erfindung betrifft ein Verfahren zum Herstellen von unterschiedlich beschichteten Kunststoffformteilen, insbesondere in aufeinanderfolgenden Zyklen, wobei unterschiedliche Dekormaterialien in einer Spritzgießmaschine mit plastifizierter Kunststoffmasse versehen und zu einem beschichteten Kunststoffformteil ausgeformt werden, insbesondere durch Hinterspritzen oder Hinterpressen des Dekormaterials mit der plastifizierten Kunststoffmasse sowie eine Vorrichtung zur Durchführung des Verfahrens.

In vielen Bereichen der Technik werden beschichtete Kunststoffformteile verwendet. Beispielsweise werden im Bereich der Automobiltechnik in zunehmendem Maße sowohl im Innenraum als auch im Außenbereich durch mit plastifizierter Kunststoffmasse hinterspritzte oder hinterpresste Kunststoffformteile eingesetzt. Diese Kunststoffformteile bestehen häufig aus einer Folie aus TPO oder PVC oder auch aus Stoffen, Stoffverbunden, allgemein Textilien oder Teppichen, die auf einer Spritzgießmaschine mit einem Kunststoffmaterial hinterspritzt oder hinterpresst werden. Solche beschichteten Kunststoffformteile werden häufig im Innenraum von Fahrzeugen verbaut. Für Außenteile werden üblicherweise Lackträgerfolien verwendet; hierbei handelt es sich um Folien auf Basis von PC, PMMA, ASA oder ABS, die mit eine Farbschicht aufweisen. Weitere Anwendungsgebiete der Erfindung liegen in der Verpackungstechnik (zum Beispiel beim sogenannten Inmold-Labeln), in der Elektrotechnik (z. B. Gehäuseteile für Mobilfunkgeräte) oder auch bei Haushalts- oder Freizeitgeräten.

Nachfolgend soll allgemein von einem Dekormaterial oder einem Dekorteil die Rede sein. Hierunter fallen sowohl vorgeformte einzelne Dekorteile als auch Dekorbahnen auf einer Rolle oder dergleichen. Ebenso sollen alle mit plastifizerbarer Kunststoffmasse versehbaren Materialien als Dekormaterialien zu verstehen sein; hierunter fallen beispielsweise die oben aufgezählten Materialien. Es versteht sich jedoch von selbst, dass es sich nicht um eine abschließende Aufzählung handelt.

Zur Herstellung von beschichteten Kunststoffteilen sind verschiedene Verfahrensvarianten bekannt. Beispielhaft sei auf die Dokumente EP 0 333 198 B1, DE 19531143 A und EP 1 115 547 B1 hingewiesen.

Wenn in einem Formwerkzeug einer Spritzgießmaschine verschiedene Dekormaterialien hinterspritzt oder hinterpresst werden, beispielsweise im Standardspritzgieß- oder im Spritzprägeverfahren, müssen bei einem Wechsel des Dekormaterials die Prozessdaten geändert und die Spritzparameter nachgestellt werden. Dies geschieht in der Regel von Hand, was sich insofern nachteilig auswirkt, als einerseits die Produktion angehalten und für eine gewisse Zeit unterbrochen wird und andererseits Personal bereitgehalten werden muss, um die Spritzgießmaschine neu einzurichten.

Beispielhaft sei die Herstellung von Türseitenverkleidungen von Automobilen genannt, wo zum Beispiel teilweise Rundstrick und teilweise Flachgewebewaren hinterspritzt werden sollen. Ein Wechsel des Dekormaterials innerhalb einer Produktion ist nicht ohne weiteres möglich, da das Dehnverhalten der Stoffe unterschiedlich ist. Daher muss bei einem Wechsel des Dekormaterials die Spritzgießmaschine angehalten und das Programm für das neue Dekormaterial eingelesen werden; danach kann die Spritzgießmaschine wieder angefahren werden.

Das gleiche Problem stellt sich zum Beispiel auch beim Hinterspritzen von Folien für eine Automobilbeplankung. Hier variieren die Farben und eventuell auch der Aufbau der Folien (Monofolien, coextrudierte Folien, Foliendicke, usw.). Monofolien sind zum Beispiel dünner als coextrudierte Folien, so dass bei Monofolien mehr Schussgewicht an plastifizierter Kunststoffmasse und eine andere Nachdruckzeit benötigt wird. Es müssen also das Einspritzprofil und der Umschaltzeitpunkt auf Nachdruck sowie das Nachdruckprofil geändert und angepasst werden.

Ein Programmauswahlsystem zum automatischen Erfassen von Oberflächeneigenschaften einer zu bearbeitenden Ware ist aus der EP0780744 bekannt.

Ausgehend hiervon liegt der Erfindung die Aufgabe zugrunde, ein Verfahren und eine Vorrichtung anzugeben, um mit unterschiedlichen Dekormaterialien beschichtete Kunststoffformteile ohne Unterbrechung der Produktion und ohne zusätzlichen Personalaufwand herstellen zu können.

Die Lösung dieser Aufgabe erfolgt durch ein Verfahren mit den Merkmalen von Anspruch 1 sowie mit einer Vorrichtung mit den Merkmalen von Anspruch 10. Dadurch, dass Dekormaterialien mit einer Codierung verwendet werden, kann mit einem geeigneten Lesegerät die Codierung gelesen und ausgewertet werden, so dass die Spritzgießmaschine automatisch das Dekormaterial erkennt und den für dieses Dekormaterial in der Maschinensteuerung hinterlegten spezifischen Spritzgießzyklus ausführt. Die Codierung kann beispielsweise mittels eines Barcodes erfolgen und der Roboter zum Einlegen des Dekormaterials mit einem Barcodelesegerät ausgestattet werden. Es können aber auch andere optische Erkennungsmethoden vorgesehen werden. Wenn beispielsweise Dekormaterialen unterschiedlicher Farbe verwendet werden, kann die Farbe als "Codierung" dienen und diese Farbe von einem entsprechenden Farberkennungsgerät "gelesen" werden. Bei textilen Dekormaterialen kann auch die Struktur des Dekormaterials als "Codierung" dienen. Beispielsweise kann man mit einer Kamera ermitteln, ob ein Rundstrickmaterial oder ein Flachgewebe vorliegt, das mit Kunststoffmasse hinterspritzt oder hinterpresst werden soll. Die dekorspezifischen Datensätze für die Prozessdaten, d.h. die Datensätze für das Spritzgießverfahren des jeweiligen Dekormaterials, können in einem geeigneten Datenspeicher in der Steuerung der Spritzgießmaschine hinterlegt sein, oder von einem separaten Datenspeicher ausgelesen und ausgewertet werden.

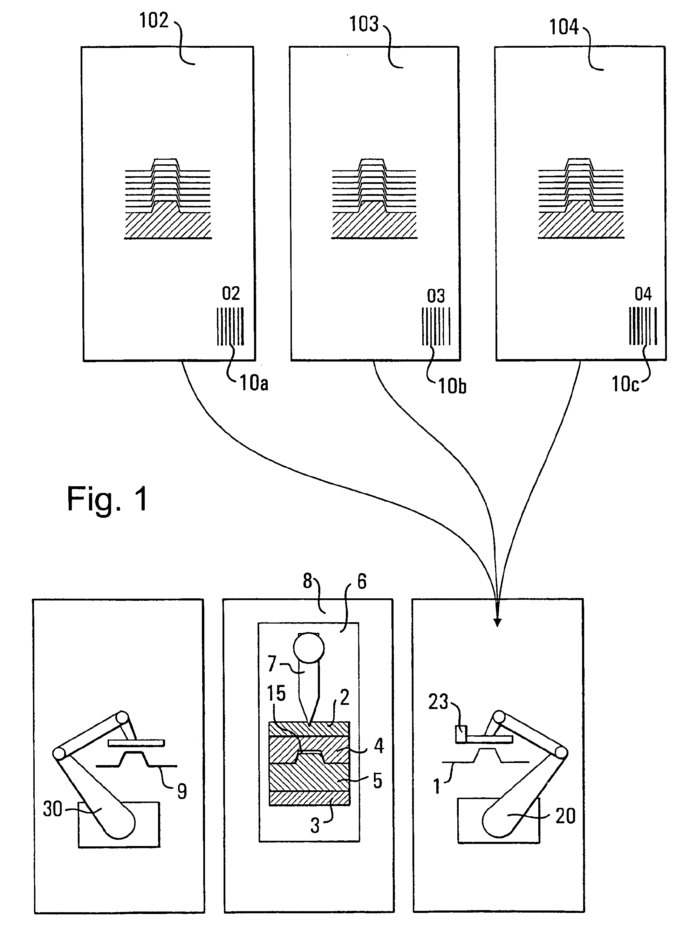

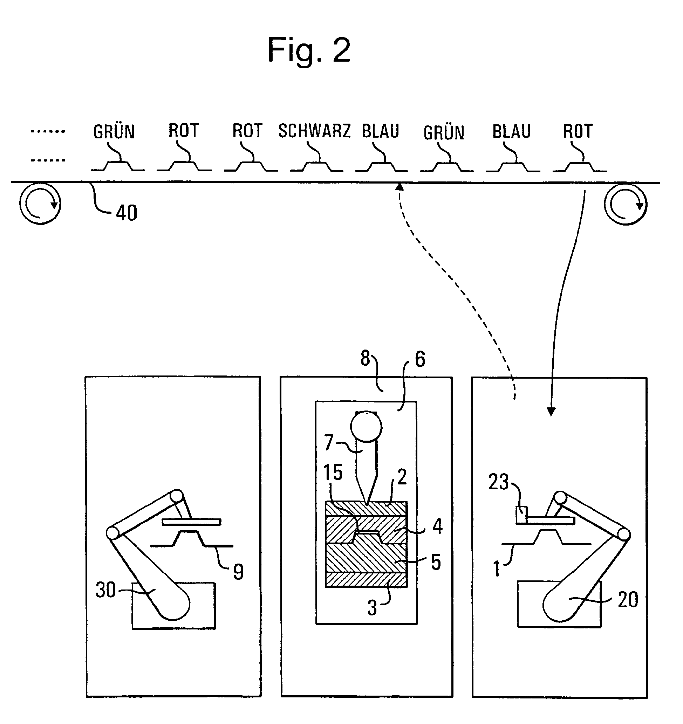

Nachfolgend soll die Erfindung anhand eines Ausführungsbeispiels und unter Bezugnahme auf die Figuren 1 und 2 näher beschrieben werden.

Figur 1 zeigt schematisch drei Stapel oder Magazine 102, 103 und 104 mit bereits vorgeformten Dekorteilen von jeweils unterschiedlicher Beschaffenheit und/oder unterschiedlicher Farbe. Es handelt sich also um drei unterschiedliche Dekormaterialien. Jedes Dekorteil verfügt über einen für dieses Dekormaterial spezifischen Barcode 10a bis 10c, wie er vergrößert in den die Stapel umgebenden Kästchen dargestellt ist. Entsprechend dem gewünschten Produktionsablauf greift ein Roboter 20 von einem der Stapel ein Dekorteil 1 und legt es in die Spritzgießmaschine 8 ein. Diese weist auf einem Maschinenbett 6 eine Einspritzeinheit 7 sowie eine feststehende Formaufspannplatte 2 und eine bewegliche Formaufspannplatte 3 mit Formhälften 4 und 5 auf. Der Aufbau und die Funktionsweise einer solchen Spritzgießmaschine ist an sich bekannt, so dass an dieser Stelle eine nähere Beschreibung nicht erforderlich ist. Zwischen den Formhälften 4 und 5 wird ein Formhohlraum 15 gebildet, in den plastifizierte Kunststoffmasse eingespritzt wird. Wenn das hinterspritzte Dekorteil 1 genügend abgekühlt und ausgeformt ist, kann das fertige beschichtete Kunststoffformteil 9 von einem zweiten Roboter 30 entnommen und auf einem hier nicht dargestellten Stapel für die fertigen Kunststoffformteile abgelegt werden. Bedarfsweise kann auch nur mit einem Roboter gearbeitet werden. Als Roboter können sogenannte Sechsachsen-Roboter oder Linearhandlinggeräte vorgesehen werden.

Zum Lesen des Barcodes verfügt der Roboter 20 über ein an sich bekanntes und daher hier nicht näher dargestelltes und beschriebenes Barcodelesegerät 23. Je nach Art der Codierung (Barcode, Farbe, Struktur usw.) ist anstelle des Barcodelesegeräts 23 ein anderes die jeweilige Art der Codierung erkennendes Code-Erkennungs-Gerät an dem Roboter 20 vorgesehen.

Wenn in der Produktion von einem Dekorteil 102 aus einem ersten Dekormaterial auf ein anderes Dekorteil 103 aus einem anderen Dekormaterial gewechselt wird, erkennt dies das Barcodelesegerät 23 am Roboter und gibt an die Steuerung der Spritzgießmaschine ein entsprechendes Signal, den nun folgenden Spritzgießzyklus mit den Prozessdaten für das Dekorteil 103 auszuführen. Je nachdem wie sich das Dekorteil 103 von dem Dekorteil 102 unterscheidet, werden dann automatisch eine oder mehrere Prozessparameter geändert und an das neue Dekorteil angepasst.

Anstelle von vorgeformten Dekorteilen kann das Dekormaterial auch bahnförmig auf Rollen bereitgehalten und mit geeigneten Vorrichtungen in den Bereich zwischen die Formhälften eingezogen und abgetrennt werden. In diesem Fall ist zwischen den Formhälften 4 und 5 noch ein an sich bekannter Spannrahmen vorgesehen, mit dem das Dekormaterial zwischen den geöffneten Formhälften 4 und 5 gehalten werden kann. Über die Einstellung des Spannrahmendrucks kann das Einziehen des Bahnmaterials und Anlegen desselben an die Innenseite einer Formhälfte unter der Wirkung der gegen das Bahnmaterial eingespritzten plastifizierten Kunststoffmasse so eingestellt werden, dass möglichst keine Falten gebildet werden, wenn sich das Bahnmaterial an die Formhälfte anlegt. Ferner kann das Dekormaterial als Zuschnittware bereitgestellt und mittels eines Spannrahmens zwischen den geöffneten Formhälften auf Spannung gehalten werden. Je nach verwendetem bahnförmigem Dekormaterial kann dann entsprechend der jeweiligen Codierung zum Beispiel die Kraft im Spannrahmen bzw. der Spannrahmendruck an das jeweilige Dekormaterial angepasst werden. Auf diese Weise kann das Dekormaterial während des Zufahrens des Spritzgießwerkzeugs und Einspritzen der plastifizierten Kunststoffmasse faltenfrei eingezogen und positioniert werden.

Bei einem Wechsel des Dekormaterials können gemäß der Codierung des neuen Dekormaterials beispielsweise folgende Prozessparameter automatisch geändert und automatisch neu eingestellt werden: Prägehub, Prägegeschwindigkeit, Startpunkt für Einspritzen und Prägen, Vorformzeit des Dekormaterials, Einspritzgeschwindigkeit, Einspritrprofilstufen, Umschaltpunkt auf Nachdruck, Höhe des Nachdrucks, Nachdruckzeit, Staudruck im Schneckenvorraum, Einspritzdruck, Schneckendrehzahl beim Plastifizieren, Einspritzhub (Hub der Schnecke oder eines Kolbens eines Shotpots), Ansteuerung der einzelnen Verschlussdüsen einer Kaskade beim Kaskadenspritzgießen.

Anstelle des Dekormaterials selbst kann auch das Dekorvorratsbehältnis (Magazin, Rolle) mit einer für dieses Dekormaterial repräsentativen Codierung versehen sein. Beispielsweise können in Figur 1 Magazine 102 bis 104 vorgesehen werden, in denen die vorgeformten und/oder zugeschnittenen Dekorteile 1 bereitgestellt werden. Es genügt dann, die Codierung, beispielsweise einen Barcode 02, 03 und 04 an den Magazinen 102 bis 104 vorzusehen. Von dem Code-Erkennungsgerät 23 am Roboter 1 wird dann bei der Entnahme eines Dekorteils 1 vor oder nach der Entnahme dieser Barcode gelesen und die zugehörigen Prozessdaten in die Steuerung der Spritzgießmaschine eingelesen wird. Ebenso kann bei einem auf einer Rolle bereitgehaltenen Dekormaterial an der Rolle eine Codierung vorgesehen sein.

Es ist auch möglich, eine bestimmte Zuordnung von Dekormaterialien zu bestimmten Dekorvorratsbehältnissen oder -stationen, zum Beispiel zu den Stapel oder Magazinen 102 bis 104 gemäß Figur 1, festzulegen und diese Zuordnung in dem Datenspeicher der Spritzgießmaschine zu hinterlegen oder in diesen zu gegebener Zeit, spätestens zu Beginn des Spritzgießvorganges, einzulesen. Beim Hinterspritzen bzw. Hinterpressen greift der Roboter dann automatisch auf das "richtige" Magazin oder den "richtigen" Stapel zu.

Im Falle von einzelnen, vorgeformten oder zugeschnittenen Dekorteilen 1 können diese auch, wie in der Figur 2 schematisch dargestellt, auf einem Förderband 40 der Spritzgießmaschine zugeleitet werden. Beim Greifen der einzelnen Dekorteile 1 erkennt das Code-Erkennungsgerät 23 am Roboter 20 das Dekormaterial und der Spritzgießzyklus kann anhand der für dieses Dekormaterial hinterlegten Prozessdaten ausgeführt werden. Beispielsweise können Lackträgerfolien für Kotflügel von Personenkraftwagen unterschiedliche Farben aufweisen, je nach Farbe des späteren Fahrzeugs, d.h. es werden auf dem Förderband in beliebiger Reihenfolge Lackträgerfolien unterschiedlicher Farbe der Spritzgießmaschine zugeführt (z. B.: rot, blau, grün, blau, schwarz, rot, rot, grün,...). Aufgrund der Codierung der Lackträgerfolien (hier könnte z. B. die Farbe als Codierung dienen) wird für jede Lackträgefolie das "richtige" Spritzgießprogramm ausgeführt. Bei dieser Variante der Erfindung kann der Roboter 20 gegebenenfalls während des Spritzgießens in einem Zwischenschritt jeweils zu einer Folie (bzw. einem Dekorteil) 1 bewegt werden, die erst einige Zyklen später hinterspritzt oder hinterpresst wird, so dass dann, wenn diese Folie ergriffen und in das Spritzgießwerkzeug eingelegt wird, die Prozessdaten für diese Folie schon eingelesen sind und die Steuerung der Spritzgießmaschine sofort das Programm für diese Folie ausführen kann. Dieses vorangehende Abtasten kann eine oder mehrere Folien weit reichen, je nach Anwendungsfall und Geschwindigkeit, mit der einerseits der Spritzgießzyklus abläuft und andererseits die jeweiligen Prozessdaten eingelesen und bereitgestellt werden können. Dieser Zwischenschritt ist durch die gestrichelte Linie in Figur 2 angedeutet. Nach dem Hinterspritzen des Dekorteils 1 kann dieses von einem weiteren Roboter 30 oder gegebenenfalls von dem gleichen Roboter 20 aus der geöffneten Form entnommen und auf ein hier nicht dargestelltes weiteres Förderband oder in ein Magazin abgelegt werden. Anstelle der hier gezeigten horizontalen Förderung können die Dekorteile alternativ oder bedarfsweise zusätzlich auch vertikal gefördert werden, beipielsweise nach Art eines Paternoster oder dergleichen, wenn die Arbeitshöhe der Spritzgießmaschine oder allgemein die Umstände der Produktion dies erfordern.

### Bezugszeichenliste

- 1: Dekorteil
- 2: Feststehende Formaufspannplatte
- 3: Bewegliche Formaufspannplatte
- 4: Feststehende Formhälfte
- 5: Bewegliche Formhälfte
- 6: Maschinenbett
- 7: Einspritzeinheit
- 8: Spritzgießmaschine
- 9: Fertiges beschichtetes Kunststoffformteil
- 10a - c: Barcodes
- 20: Erster Roboter
- 23: Barcodelesegerät
- 30: Zweiter Roboter
- 40: Förderband
- 102: Erster Stapel (oder Magazin) von Dekorteilen aus einem ersten Dekormaterial
- 103: Zweiter Stapel (oder Magazin) von Dekorteilen aus einem zweiten Dekor- material
- 104: Dritter Stapel (oder Magazin) von Dekorteilen aus einem dritten Dekormaterial

## Patentansprüche

1. Verfahren zum Herstellen von unterschiedlich beschichteten Kunststoffformteilen, insbesondere in aufeinanderfolgenden Zyklen, wobei unterschiedliche Dekormaterialien in einer Spritzgießmaschine mit plastifizierter Kunststoffmasse versehen und zu einem beschichteten Kunststoffformteil ausgeformt werden, insbesondere durch Hinterspritzen oder Hinterpressen des Dekormaterials mit der plastifizierten Kunststoffmasse,
**dadurch gekennzeichnet,**
**dass** Dekormaterialien (1) mit einer Codierung (10a, 10b, 10c) verwendet werden, wobei für unterschiedliche Dekormaterialien jeweils eine für dieses Dekormaterial charakteristische und dessen Eigenschaften repräsentierende Codierung vorgesehen wird, dass vor oder während des Einlegens des Dekormaterials (1) in die Spritzgießmaschine (8) und/oder vor dem Zufahren der Formhälften (2, 3) der Spritzgießmaschine (8) die Codierung (10a, 10b, 10c) gelesen wird, dass entsprechend der Codierung (10a, 10b, 10c) die für dieses Dekormaterial (1) bereitgehaltenen Prozessdaten in die Steuerung der Spritzgießmaschine (8) eingelesen werden und dass der Spritzgießzyklus anhand dieser Prozessdaten für dieses Dekormaterial (1) ausgeführt wird.

2. Verfahren nach Anspruch 1,
**dadurch gekennzeichnet,**
**dass** die Dekormaterialen oder das Dekorvorratsbehältnis (Magazin, Rolle) mit einem Barcode codiert sind und der Barcode von einem Barcodelesegerät gelesen wird.

3. Verfahren nach Anspruch 1 oder 2,
**dadurch gekennzeichnet,**
**dass** die Farbe des Dekormaterials als Codierung dient und ein Farberkennungsgerät verwendet wird.

4. Verfahren nach einem der Ansprüche 1 bis 3,
**dadurch gekennzeichnet,**
**dass** die Struktur des Dekormaterials als Codierung dient und ein Strukturerkennungsgerät verwendet wird, beispielsweise zur Erkennung von Rundstrickgewebe oder Flachgewebe.

5. Verfahren nach einem der Ansprüche 1 bis 4,
**dadurch gekennzeichnet,**
**dass** die Dicke des Dekormaterials als Codierung dient und ein Messgerät zur Ermittlung der Dicke des Dekormaterials verwendet wird.

6. Verfahren nach einem der Ansprüche 1 bis 5,
**dadurch gekennzeichnet,**
**dass** einer oder mehrere der nachfolgend aufgeführten Prozessparameter bei einem Wechsel des Dekormaterials gemäß der Codierung des neuen Dekormaterials automatisch geändert und automatisch neu eingestellt werden: Prägehub, Prägegeschwindigkeit, Startpunkt für Einspritzen und Prägen, Vorformzeit, Einspritzgeschwindigkeit, Einspritzprofilstufen, Umschaltpunkt auf Nachdruck, Höhe des Nachdrucks, Nachdruckzeit, Staudruck, Einspritzdruck, Schneckendrehzahl, Einspritzhub, Ansteuerung der Verschlussdüsen einer Kaskade.

7. Verfahren nach einem der Ansprüche 1 bis 6,
**dadurch gekennzeichnet,**
**dass** Dekorteile aus vorgeformtem und/oder zugeschnittenem Dekormaterial verwendet werden und dass die Dekorteile auf einem Förderband und/oder einem Paternoster der Spritzgießmaschine zugeführt werden.

8. Verfahren nach Anspruch 7,
**dadurch gekennzeichnet,**
**dass** die Codierung eines Dekorteils einen oder mehrere Spritzgießzyklen vor dem Hinterspritzen oder Hinterpressen von diesem Dekorteil gelesen wird.

9. Verfahren nach einem der Ansprüche 1 bis 6,
**dadurch gekennzeichnet,**
**dass** eine bestimmte Zuordnung von Dekormaterialien zu bestimmten Dekorvorratsbehältnissen oder -stationen, beispielsweise zu Stapeln oder Magazinen, festgelegt wird und dass diese Zuordnung in dem Datenspeicher der Spritzgießmaschine hinterlegt wird.

10. Vorrichtung zur Durchführung des Verfahrens nach einem der Ansprüche 1 bis 9,
**gekennzeichnet durch**,
eine Spritzgießmaschine (8) zum Hinterspritzen oder Hinterpressen von Dekormaterial (1), wenigstens einen Datenspeicher, in dem Prozessdaten für unterschiedliche Dekormaterialien hinterlegt sind oder in den Prozessdaten für unterschiedliche Dekormaterialien einlesbar sind, Mittel (20) zum Einlegen des Dekormaterials in das geöffnete Formwerkzeug (4, 5) der Spritzgießmaschine (8), Mittel (23) zum Lesen einer Codierung (10a, 10b, 10c) des Dekormaterials (1), Mittel zum Auswerten der Codierung, und eine Maschinensteuerung zum Auslesen des Datenspeichers entsprechend der Codierung sowie zum Betreiben der Spritzgießmaschine (8) entsprechend dem ausgelesenen Datensatz.

11. Vorrichtung nach Anspruch 10,
**dadurch gekennzeichnet,**
**dass** zum Einlegen des Dekormaterials ein Roboter (30) vorgesehen ist und dass der Roboter (30) über Mittel (23) zum Lesen einer Codierung verfügt.

12. Vorrichtung nach Anspruch 11,
**dadurch gekennzeichnet,**
**dass** an dem Roboter (30) eine Barcodelesegerät (23) vorgesehen ist.

13. Vorrichtung nach Anspruch 11,
**dadurch gekennzeichnet,**
**dass** an dem Roboter ein Bilderkennungsgerät, beispielsweise eine CCD-Kamera, zum Erkennen von Strukturen des Dekormaterials vorgesehen ist.

14. Vorrichtung nach Anspruch 11,
**dadurch gekennzeichnet,**
**dass** an dem Roboter ein Farberkennungsgerät vorgesehen ist.

15. Vorrichtung nach einem der Ansprüche 10 bis 14,
**dadurch gekennzeichnet,**
**dass** Magazine oder Stapel (102 bis 104) vorgesehen sind, in bzw. auf denen vorgeformtes und/oder zugeschnittenes Dekormaterial bereitgehalten werden kann und dass an dem Magazin oder an dem Stapel eine Codierung entsprechend dem dort bevorrateten Dekormaterial vorgesehen ist.

16. Vorrichtung nach einem der Ansprüche 10 bis 14,
**dadurch gekennzeichnet,**
**dass** ein vertikales Fördersystem, beispielsweise nach Art eines Paternosters vorgesehen ist, auf dem vorgeformtes und/oder zugeschnittenes Dekormaterial der Spritzgießmaschine (8) kontinuierlich zuführbar ist und dass die Codierung an dem Dekormaterial vorgesehen ist.

17. Vorrichtung nach einem der Ansprüche 10 bis 14,
**dadurch gekennzeichnet,**
**dass** ein Förderband (40) vorgesehen ist, auf dem vorgeformtes und/oder zugeschnittenes Dekormaterial der Spritzgießmaschine (8) kontinuierlich zuführbar ist und dass die Codierung an dem Dekormaterial vorgesehen ist.

## Claims

1. Method for the production of differently coated plastic mouldings, in particular in successive cycles, wherein different decorative materials are provided with plasticized plastic moulding material in an injection-moulding machine and are moulded to form a coated plastic moulding, in particular by back injection-moulding or back compression-moulding of the decorative material with the plasticized plastic moulding material,
**characterized in that**
decorative materials (1) are used with a coding (10a, 10b, 10c), wherein for different decorative materials respectively a coding is provided which is characteristic for this decorative material and represents its characteristics, that before or during the insertion of the decorative material (1) into the injection-moulding machine (8) and/or before the closing of the mould halves (2, 3) of the injection-moulding machine (8), the coding (10a, 10b, 10c) is read, that in accordance with the coding (10a, 10b, 10c) the process data which are held for this decorative material (1) are read into the control arrangement of the injection-moulding machine (8) and that the injection-moulding cycle is carried out with the aid of these process data for this decorative material (1).

2. Method according to Claim 1,
**characterized in that**
the decorative materials or the decoration storage container (magazine, roll) are coded with a barcode and the barcode and the barcode is read by a barcode reader.

3. Method according to Claim 1 or 2,
**characterized in that**
the colour of the decorative material serves as a coding and a colour recognition apparatus is used.

4. Method according to one of Claims 1 to 3,
**characterized in that**
the structure of the decorative material serves as a coding and a structure recognition apparatus is used, for example for the recognition of circular knit fabric or flat fabric.

5. Method according to one of Claims 1 to 4,
**characterized in that**
the thickness of the decorative material serves as a coding and a measuring apparatus is used for determining the thickness of the decorative material.

6. Method according to one of Claims 1 to 5,
**characterized in that**
one or several of the process parameters listed below are changed automatically and are re-set automatically in the case of a changeover of the decorative material in accordance with the coding of the new decorative material: stamping stroke, stamping speed, starting point for injecting and stamping, preforming time, injection speed, injection profile stages, switchover point to after-pressure, level of after-pressure, after-pressure time, impact pressure, injection pressure, worm rotation speed, injection stroke, actuation of the closure nozzles of a cascade.

7. Method according to one of Claims 1 to 6,
**characterized in that**
decorative parts of pre-formed and/or custom-tailored decorative material are used, and that decorative parts are supplied to the injection-moulding machine on a conveyor belt and/or on a paternoster.

8. Method according to Claim 7,
**characterized in that**
the coding of a decorative part is read one or several injection-moulding cycles before the back injection-moulding or back compression-moulding of this decorative part.

9. Method according to one of Claims 1 to 6,
**characterized in that**
a particular allocation of decorative materials to particular decoration storage containers or stations, for example to stacks or magazines, is established and that this allocation is entered in the data memory of the injection-moulding machine.

10. Device for carrying out the method according to one of Claims 1 to 9,
**characterized by**
an injection-moulding machine (8) for the back injection-moulding or back compression-moulding of decorative material (1), at least one data memory, in which process data for different decorative materials are entered or in which process data for different decorative materials are able to be read in, means (20) for inserting the decorative material into the opened moulding tool (4, 5) of the injection-moulding machine (8), means (23) for reading a coding (10a, 10b, 10c) of the decorative material (1), means for evaluating the coding, and a machine control arrangement for reading the data memory in accordance with the coding and for operating the injection-moulding machine (8) in accordance with the data set which is read out.

11. Device according to Claim 10,
**characterized in that**
a robot (30) is provided for inserting the decorative material, and that the robot (30) has means (23) for reading a coding.

12. Device according to Claim 11,
**characterized in that**
a barcode reader (23) is provided on the robot (30).

13. Device according to Claim 11,
**characterized in that**
an image recognition apparatus, for example a CCD camera, is provided on the robot for the recognition of structures of the decorative material.

14. Device according to Claim 11,
**characterized in that**
a colour recognition apparatus is provided on the robot.

15. Device according to one of Claims 10 to 14,
**characterized in that**
magazines or stacks (102 to 104) are provided, in or respectively on which pre-formed and/or custom-tailored decorative material can be held in readiness, and that on the magazine or on the stack a coding is provided, corresponding to the decorative material which is stored there.

16. Device according to one of Claims 10 to 14,
**characterized in that**
a vertical conveying system, for example in the manner of a paternoster is provided, on which pre-formed and/or custom-tailored decorative material is able to be supplied continuously to the injection-moulding machine (8), and that the coding is provided on the decorative material.

17. Device according to one of Claims 10 to 14,
**characterized in that**
a conveyor belt (40) is provided, on which pre-formed and/or custom-tailored decorative material is able to be supplied continuously to the injection-moulding machine (8), and that the coding is provided on the decorative material.

## Revendications

1. Procédé pour produire des pièces moulées en plastique à revêtement différent, en particulier dans des cycles successifs, dans lequel des matériaux décoratifs différents sont munis d'une masse de matière plastique plastifiée dans une machine de moulage par injection et sont formés en une pièce moulée en plastique revêtue, en particulier par surmoulage ou surpressage du matériau décoratif avec la masse de matière plastique plastifiée, **caractérisé en ce qu'**on emploie des matériaux décoratifs (1) avec un codage (10a, 10b, 10c), sachant que pour des matériaux décoratifs différents, un codage respectif caractéristique pour ce matériau décoratif et représentant ses propriétés est prévu, **en ce qu'**avant ou après le placement du matériau décoratif (1) dans la machine de moulage par injection (8) et/ou avant l'amenée des moitiés de moule (2, 3) à la machine de moulage par injection (8), le codage (10a, 10b, 10c) est lu, **en ce que** conformément au codage (10a, 10b, 10c), les données de procédé tenues à disposition pour ce matériau décoratif (1) sont lues dans la commande de la machine de moulage par injection (8) et **en ce que** le cycle de moulage par injection est effectué à l'aide de ces données de procédé pour ce matériau décoratif (1).

2. Procédé selon la revendication 1, **caractérisé en ce que** les matériaux décoratifs ou le contenant de stock de décor (magasin, rouleau) est/sont codé(s) avec un code-barres et le code-barres est lu par un appareil de lecture de code-barres.

3. Procédé selon la revendication 1 ou 2, **caractérisé en ce que** la couleur du matériau décoratif sert de codage et qu'un appareil de reconnaissance des couleurs est utilisé.

4. Procédé selon l'une des revendications 1 à 3, **caractérisé en ce que** la structure du matériau décoratif sert de codage et qu'un appareil de reconnaissance des structures est utilisé, par exemple pour reconnaître le bord côte rond ou le tissu plat.

5. Procédé selon l'une des revendications 1 à 4, **caractérisé en ce que** l'épaisseur du matériau décoratif sert de codage et qu'un appareil de mesure pour calculer l'épaisseur du décoratif est utilisé.

6. Procédé selon l'une des revendications 1 à 5, **caractérisé en ce qu'**un ou plusieurs des paramètres de procédé listés ci-après est/sont automatiquement modifié(s) et automatiquement réglé(s) de nouveau conformément au codage du nouveau matériau décoratif lorsque l'on change le matériau décoratif : levage d'estampage, vitesse d'estampage, point de démarrage pour l'injection et l'estampage, temps de pré-moulage, vitesse d'injection, paliers de profilage d'injection, point de commutation au maintien en pression, hauteur de maintien en pression, durée du maintien en pression, pression dynamique, pression d'injection, régime de la vis sans fin, levage d'injection, commande des filières de fermeture d'une cascade.

7. Procédé selon l'une des revendications 1 à 6, **caractérisé en ce que** des pièces décoratives de matériau décoratif pré-formé et/ou découpé sont utilisées et que les pièces décoratives sont amenées à la machine de moulage par injection sur une bande transporteuse et/ou un pater noster.

8. Procédé selon la revendication 7, **caractérisé en ce que** le codage d'une pièce décorative est lu pour un ou plusieurs cycle(s) de moulage par injection avant le surmoulage ou le surpressage de cette pièce décorative.

9. Procédé selon l'une des revendications 1 à 6, **caractérisé en ce que** l'on détermine une attribution précise des matériaux décoratifs à des contenants ou postes de stock de décor, par exemple pour former des piles ou des magasins, et que cette attribution est placée dans la mémoire de données de la machine de moulage par injection.

10. Dispositif pour effectuer le procédé selon l'une des revendications 1 à 9, **caractérisé par** une machine de moulage par injection (8) pour le surmoulage ou le surpressage de matériau décoratif (1), au moins une mémoire de données dans laquelle des données de procédé sont placées pour des matériaux décoratifs différents ou sont lisibles dans les données de procédé pour les matériaux décoratifs différents, des moyens (20) pour placer le matériau décoratif dans le moule ouvert (4, 5) de la machine de moulage par injection (8), des moyens (23) pour lire un codage (10a, 10b, 10c) du matériau décoratif (1), des moyens pour évaluer le codage, et une commande de machine pour lire la mémoire de données conformément au codage ainsi que pour faire fonctionner la machine de moulage par injection (8) conformément au jeu de données lu.

11. Dispositif selon la revendication 10, **caractérisé en ce qu'**un robot (30) est prévu pour placer le matériau décoratif et **en ce que** le robot (30) présente des moyens (23) pour lire un codage.

12. Dispositif selon la revendication 11, **caractérisé en ce qu'**un appareil de lecture de code-barres (23) est prévu sur le robot (30).

13. Dispositif selon la revendication 11, **caractérisé en ce qu'**un appareil de reconnaissance d'images est prévu sur le robot, par exemple une caméra CCD, pour reconnaître les structures du matériau décoratif.

14. Dispositif selon la revendication 11, **caractérisé en ce qu'**un appareil de reconnaissance des couleurs est prévu sur le robot.

15. Dispositif selon l'une des revendications 10 à 14, **caractérisé en ce que** des magasins ou des piles (102 à 104) sont prévus, dans respectivement sur lesquels du matériau décoratif pré-formé et/ou découpé peut être tenu à disposition et que sur le magasin ou sur la pile, un codage est prévu conformément au matériau décoratif stocké à cet endroit.

16. Dispositif selon l'une des revendications 10 à 14, **caractérisé en ce qu'**un système de transport vertical est prévu, par exemple du type pater noster, sur lequel du matériau décoratif pré-formé et/ou découpé peut être amené en continu à la machine de moulage par injection (8) et que le codage est prévu sur le matériau décoratif.

17. Dispositif selon l'une des revendications 10 à 14, **caractérisé en ce qu'**une bande transporteuse (40) est prévue, sur laquelle du matériau décoratif pré-formé et/ou découpé peut être amené en continu à la machine de moulage par injection (8) et que le codage est prévu sur le matériau décoratif.
